# EUROPEAN PATENT APPLICATION

(11) **EP 4 693 586 A1**
(43) Date of publication of application: **11.02.2026**
(21) Application number: 24780645.8
(22) Date of filing: 28.03.2024
(51) Int. Cl.: H01M 10/0587, H01M 10/052, H01M 10/0567, H01M 10/0569, H01M 50/107, H01M 50/152, H01M 50/159, H01M 50/342, H01M 50/434, H01M 50/443, H01M 50/451, H01M 50/463

(54) **LITHIUM SECONDARY BATTERY**

(30) Priority: 31.03.2023 JP 2023058888
(71) Applicant: Panasonic Energy Co., Ltd., Moriguchi-shi, Osaka 570-8511 (JP)
(72) Inventor: SADAKANE, Takuya, Kadoma-shi, Osaka 571-0057 (JP)
(74) Representative: Novagraaf International SA
(86) International application number: PCT/JP2024/012666
(87) International publication number: WO 2024/204545

(57) **Abstract**

A lithium secondary battery includes a power generating element, and a battery case in which the power generating element is sealed. The power generating element includes a positive electrode, a negative electrode, a separator disposed between the positive electrode and the negative electrode, and a nonaqueous electrolyte. At the negative electrode, lithium metal deposits during charging, and the lithium metal dissolves during discharging. The separator includes a substrate and a spacer. The lithium secondary battery includes a pressure release mechanism that discharges a gas within the battery case outside the battery case when a pressure inside the battery case reaches a predetermined value P. The predetermined value P is less than 3 MPa.

## Description

### [Technical Field]

The present disclosure relates to a lithium secondary battery.

### [Background Art]

Lithium-ion batteries have been known as high-capacity nonaqueous electrolyte secondary batteries. As high-capacity nonaqueous electrolyte secondary batteries superior to lithium-ion batteries, lithium secondary batteries (lithium-metal secondary batteries) are promising. In a lithium secondary battery, during charging, lithium metal deposits on the negative electrode, and the lithium metal dissolves during discharging, to be released as lithium ions in the nonaqueous electrolyte.

In a lithium secondary battery, in which lithium metal deposits on the negative electrode during charging, it is necessary to ensure a space for lithium to deposit, by providing a spacer between the separator and the electrode.

Patent Literature 1 proposes "a lithium secondary battery, comprising: an electrode group in which a positive electrode, a negative electrode, and a separator interposed between the positive electrode and the negative electrode are wound together; and a lithium-ion conductive nonaqueous electrolyte, wherein: the negative electrode includes a negative electrode current collector; the negative electrode current collector includes a layer having a first surface facing outward of the winding of the electrode group, and a second surface facing inward of the winding of the electrode group; a plurality of first protrusions protruding from the first surface; and a plurality of second protrusions protruding from the second surface; lithium metal deposits on the first surface and the second surface during charging; and a second average height of the plurality of second protrusions is higher than a first average height of the plurality of first protrusions."

Patent Literature 2 proposes "a sealed battery, comprising: a battery case including an outer can having a bottomed tubular shape, and a sealing body closing an opening of the outer can; and an electrode body housed in the battery case, wherein: the sealing body includes a metal plate; the metal plate has a thin-walled portion formed in an annular shape, a valve portion surrounded by the thin-walled portion, the valve portion having a shape protruding inward of the battery case, and configured to be reversed to protrude outward of the battery case when an pressure inside the case reaches a predetermined reversal pressure R, and an annular portion located outside the thin-walled portion; and the sealing body is configured such that the thin-walled portion ruptures simultaneously when the valve portion is reversed.

### [Citation List]

### [Patent Literature]

Patent Literature 1: Japanese Laid-Open Patent Publication No. 2019-160776
Patent Literature 2: Japanese Laid-Open Patent Publication No. 2022-31997

### [Summary of Invention]

### [Technical Problem]

Li that deposits at the negative electrode during charging is highly reactive, and in the event of an internal short circuit etc., may shift into a mode, in some cases, where the reaction rate of gas generation increases acceleratedly, to raise the increase rate of the battery internal pressure.

### [Solution to Problem]

One aspect of the present disclosure relates to a lithium secondary battery, including: a power generating element, and a battery case in which the power generating element is sealed, wherein the power generating element includes a positive electrode, a negative electrode, a separator disposed between the positive electrode and the negative electrode, and a nonaqueous electrolyte, at the negative electrode, lithium metal deposits during charging, and the lithium metal dissolves during discharging, the separator includes a substrate and a spacer, the lithium secondary battery includes a pressure release mechanism that discharges a gas within the battery case outside the battery case when a pressure inside the battery case reaches a predetermined value P, and the predetermined value P is less than 3 MPa.

### [Advantageous Effects of Invention]

According to the present disclosure, it is possible to reduce the increase rate of the battery internal pressure in the event of an internal short circuit etc.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic longitudinal sectional view of an example of a lithium secondary battery according to an embodiment of the present disclosure.
[FIG. 2] A schematic sectional view of an essential part of the lithium secondary battery of FIG. 1.
[FIG. 3] A top view of an example of a pattern of a spacer.
[FIG. 4] A top view of another example of a spacer pattern.
[FIG. 5] A top view of yet another example of a spacer pattern.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit.

### (Lithium secondary battery)

A lithium secondary battery according to an embodiment of the present disclosure includes a power generating element, and a battery case in which the power generating element is sealed. The power generating element includes a positive electrode, a negative electrode, a separator disposed between the positive electrode and the negative electrode, and a nonaqueous electrolyte. At the negative electrode, lithium metal deposits during charging, and the lithium metal dissolves during discharging. Specifically, the negative electrode has at least a negative electrode current collector, and lithium metal deposited on the negative electrode current collector. The nonaqueous electrolyte has lithium ion conductivity. The lithium secondary battery is sometimes called a lithium-metal secondary battery.

In a lithium secondary battery, for example, 70% or more of the rated capacity is exhibited through deposition and dissolution of lithium metal. The electron migration at the negative electrode during charging and during discharging is mainly due to the deposition and dissolution of lithium metal at the negative electrode. Specifically, 70 to 100% (e.g., 80 to 100% or 90 to 100%) of the electron migration (in another aspect, current flow) at the negative electrode during charging and during discharging is due to the deposition and dissolution of lithium metal. That is, the negative electrode in the lithium secondary battery differs from a negative electrode in which the electron migration at the negative electrode during charging and during discharging is mainly due to the absorption and release of lithium ions into and from the negative electrode active material (e.g., graphite).

The positive electrode, the negative electrode, and the separator are sometimes collectively referred to as an "electrode group". The positive electrode, the negative electrode, and the separator may be wound with the separator disposed between the positive electrode and the negative electrode, constituting a wound electrode group having a plurality of turns. When forming a wound electrode group, usually, a belt-shaped positive electrode, a belt-shaped negative electrode, and a belt-shaped separator are used. The electrode group may be a stack of the positive electrode, the separator, and the negative electrode.

The separator has a substrate, and a spacer. The lithium secondary battery includes a pressure release mechanism that releases a gas within the battery case outside the battery case when the pressure inside the battery case reaches a predetermined value P. The predetermined value P is less than 3 MPa. The predetermined value P is hereinafter sometimes referred to as an operating pressure of the pressure release mechanism.

During charging, Li ions released from the positive electrode are reduced at the negative electrode, and deposits in the form of metal Li. As the charging proceeds, Li further deposits on the Li deposited at the initial stage of charging. When the separator has a spacer, since the spacer has no electrical conductivity and presses the negative electrode, the deposition of Li is suppressed in a region facing the spacer of the negative electrode. On the other hand, in a region not facing the spacer of the negative electrode, although the deposition of Li proceeds preferentially, the space formed by the spacer between the positive electrode and the negative electrode is limited, so that Li deposits densely, and the surface area is reduced. Therefore, the reaction area of the negative electrode is decreased, making it possible to slow to some extent the increase of the reaction rate of reactive gas generation in association with an internal short circuit etc. When the operating pressure of the pressure release mechanism is less than 3 MPa, the pressure inside the battery can be released at a stage where the increase of the reaction rate is slow, to discharge the gas and heat, so that the increase rate of the battery internal pressure can be significantly reduced. The increase of the battery internal pressure due to gas generation can be caused by, for example, an internal short circuit, an external short circuit, overcharging, etc.

From the viewpoint of reducing the increase rate of the battery internal pressure, the predetermined value P is preferably 2.5 MPa or less. From the viewpoint of ensuring the reliability on the operation of the pressure release mechanism, the predetermined value P may be 0.8 MPa or more. The predetermined value P can be measured by a known method. As one example, with the pressure release mechanism (e.g., a metal plate having a thin-walled portion as described later) clamped and fixed at its outer periphery with a jig, a pressure is gradually applied thereto by a pneumatic system, to retrieve a pressure value (maximum pressure value during pressure application) at the time when the pressure release mechanism operates. The gas used for pressure application may be air, and may be nitrogen or argon.

### (Pressure release mechanism)

The pressure release mechanism discharges the gas when the battery internal pressure reaches the predetermined value P due to gas generation caused by an internal short circuit etc., to release the pressure. For example, the battery case may be provided with the pressure release mechanism (e.g., a pressure release valve). The battery case includes, for example, a case main body housing the power generating element, and a sealing body sealing the opening of the case main body. The case main body has, for example, a bottomed tubular shape. The sealing body or the bottom of the case main body may be provided with the pressure release mechanism (e.g., a pressure release valve).

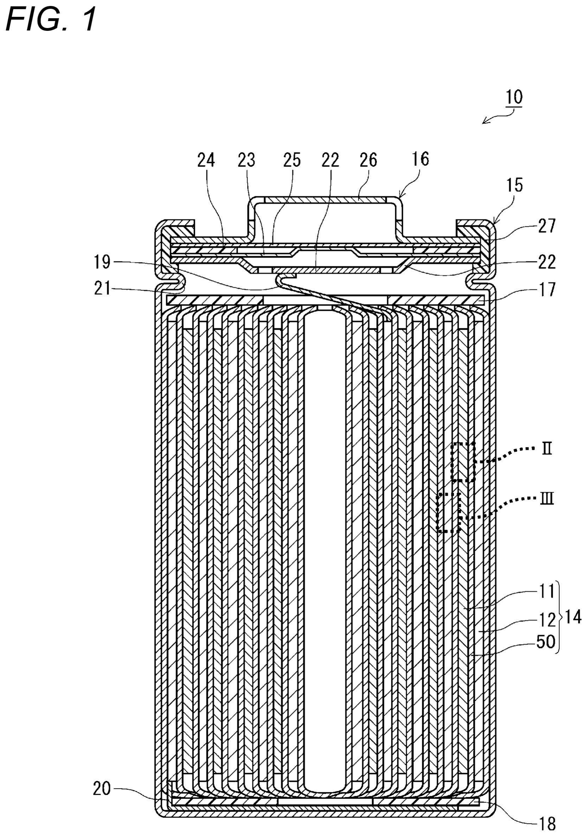

For example, the sealing body may include a metal plate, and the metal plate may have a thin-walled portion that ruptures when the pressure inside the battery case reaches the predetermined value P, so that the pressure release mechanism operates when the thin-walled portion ruptures. The thin-walled portion acts as a pressure release valve. It suffices when the metal plate has, at at least part thereof, the thin-walled portion. The metal plate as a whole may be the thin-walled portion. For example, a sealing body 16 in FIG. 1 includes an upper valve body 25, as a metal plate constituted of a thin-walled portion as a whole.

From the viewpoint of releasing the pressure inside the battery at a stage where the increase of the reaction rate is slow and facilitating the discharge of the gas and heat, a ratio T/D of a thickness T (mm) of the thin-walled portion to a maximum diameter D (mm) of the sealing body may be less than 0.009, and may be 0.007 or less. From the viewpoint of ensuring the hermeticity of the battery when the battery internal pressure increases due to gas generation during normal use (charging and discharging) of the battery, the T/D may be 0.002 or more. In the sealing body 16 in FIG. 1, the maximum diameter D is a diameter of the disc-shaped upper valve body 25, and the thickness T of the thin-walled portion is a thickness of the upper valve body 25.

A sealing body provided with the pressure release mechanism like the sealing body 16 in FIG. 1 may include a mechanism for cutting off the current when the battery internal pressure reaches a predetermined value PA. The current can be cut off at a stage where the increase of the reaction rate of gas generation due to a short circuit etc. is relatively slow, and the increase rate of the battery internal pressure can be further reduced. The operating pressure PA of the current cutoff mechanism is approximately the same as or smaller than the operating pressure P of the pressure release mechanism.

### (Separator)

The separator includes a substrate, and a spacer.

### (Substrate)

For the substrate, a porous sheet having ion permeability and insulating properties is used. Examples of the porous sheet include a microporous thin film, a woven fabric, and a nonwoven fabric. The material of the porous sheet is not particularly limited, and may be a polymer material. Examples of the polymer material include an olefin resin, a polyamide resin, and a cellulose. Examples of the olefin resin include polyethylene, polypropylene, and a copolymer of ethylene and propylene. The substrate may contain an additive, as necessary. Examples of the additive include an inorganic filler.

The thickness of the substrate is not particularly limited, and is, for example, 5 µm or more and 20 µm or less, and preferably 10 µm or more and 20 µm or less.

The substrate may include a porous sheet and a composite material layer (heat-resistant layer). The composite material layer may be formed on one principal surface of the porous sheet, and may be formed on both principal surfaces thereof. The composite material layer is a layer that allows lithium ions to pass through. The composite material layer includes inorganic particles. The composite material layer may include a resin material, as necessary. The thickness of the composite material layer may be 5% to 50% of the overall thickness of the substrate.

The composite material layer may be disposed on the side facing the positive electrode of the porous sheet, and may be disposed on the side facing the negative electrode of the porous sheet. When the composite material layer is disposed on the positive electrode side, the deterioration of the porous sheet due to oxidation reaction can be suppressed. When the composite material layer is disposed on the negative electrode side, the deterioration of the porous sheet due to reduction reaction can be suppressed. A spacer may be disposed on the composite material layer. In this case, the effect of suppressing thermal shrinkage of the substrate is particularly enhanced.

The inorganic particles are preferably particles of an inorganic compound having thermal stability and insulating properties that are unlikely to melt or decompose in the event of abnormal heat generation due to a short circuit etc. in the battery. Examples of the material of the inorganic particles include an oxide, a hydroxide, a nitride, a carbide, and a sulfide. Examples of the oxide include aluminum oxide, boehmite, magnesium oxide, titanium oxide, zirconium oxide, silicon oxide, yttrium oxide, and zinc oxide. Examples of the nitride include silicon nitride, aluminum nitride, boron nitride, and titanium nitride. Examples of the carbide include silicon carbide, and boron carbide. Examples of the sulfide include barium sulfate. Examples of the hydroxide include aluminum hydroxide. The median diameter in a volume-based particle size distribution of the inorganic particles may be 0.2 to 2.0 µm.

The median diameter in a volume-based particle size distribution of the inorganic particles can be measured, for example, with a laser diffraction-scattering type particle size distribution analyzer (e.g., Microtrac available from Nikkiso Co., Ltd.). Alternatively, a cross section of the substrate may be observed with a transmission electron microscope (TEM), to obtain a TEM image, and with respect to randomly selected 100 inorganic particles, an area surrounded by the contour of each particle is calculated to determine a diameter of an equivalent circle (perfect circle) having the same area as the calculated area. The median diameter may be determined as an average value of the diameters of the 100 equivalent circles.

Examples of the resin material contained in the composite material layer (heat-resistant layer) include: fluorine-containing resin, such as polyvinylidene fluoride (PVdF) and polytetrafluoroethylene; fluorine-containing rubber, such as vinylidene fluoride-tetrafluoroethylene copolymer and ethylene-tetrafluoroethylene copolymer; rubbers, such as styrene-butadiene copolymer or hydrogenated product thereof, acrylonitrile-butadiene copolymer or hydrogenated product thereof, methacrylic acid ester-acrylic acid ester copolymer, styrene-acrylic acid ester copolymer, acrylonitrile-acrylic acid ester copolymer, ethylene propylene rubber, and polyvinyl acetate; cellulose derivatives, such as ethyl cellulose, methyl cellulose, hydroxyethyl cellulose, and carboxymethyl cellulose; acrylic resin, such as acrylic acid-methacrylic acid copolymer; polyphenylene ether; polysulfone; polyether sulfone; polyphenylene sulfide; polyetherimide; polyimide; polyamide, such as fully aromatic polyamide (aramid); polyamide imide; polyacrylonitrile; polyvinyl alcohol; polyether; polyacrylic acid; polymethacrylic acid; polyester; polyolefin; silicone resin; urethane resin; melamine resin; urea resin; and epoxy resin.

For the resin material contained in the composite material layer (heat-resistant layer), it is desirable to use a polymer material having higher heat resistance than the material of the porous sheet. Such a polymer material preferably includes at least one selected from the group consisting of an aromatic polyamide, an aromatic polyimide, and an aromatic polyamide imide. These are known as polymer materials with high heat resistance. From the viewpoint of heat resistance, preferred is an aramid, i.e., a meta-aramid (meta-type wholly-aromatic polyamide) and a para-aramid (para-type wholly-aromatic polyamide).

The content ratio of the inorganic particles in the composite material layer may be in the range of 50 mass% to 99 mass% (e.g., in the range of 85 mass% to 99 mass%).

The composite material layer is formed by, for example, applying an application liquid containing inorganic particles, a resin material, and a liquid component (dispersion medium), onto a porous sheet, and drying the applied film. Examples of the liquid component include N-methyl-2-pyrrolidone.

### (Spacer)

The spacer is formed on a principal surface of the substrate. The spacer may be provided on a principal surface of the substrate facing the negative electrode, may be provided on a principal surface of the substrate facing the positive electrode, and may be provided on both principal surfaces. When the spacer is provided on the principal surface of the substrate facing the positive electrode, as compared to when the spacer is provided on the principal surface of the substrate facing the negative electrode, Li is more likely to deposit densely because, between the spacers, Li deposits so as to stretch the substrate in the direction of the positive electrode, to cause a compressive stress in the deposited Li. From the viewpoint of improving the discharge efficiency and the cycle characteristics, it is preferable to provide the spacer on the principal surface of the substrate facing the positive electrode. On the other hand, when the spacer is provided on the principal surface of the substrate facing the negative electrode, since a space is formed between the substrate and the negative electrode in advance, the tension load to the substrate that occurs following to the deposition of Li is reduced. That is, it is advantageous in that the electrical insulating properties of the separator can be easily maintained, or the short-circuit resistance of the separator can be easily maintained. From the viewpoint of easily reducing the increase rate of the battery internal pressure in the event of an internal short circuit, it is preferable to provide the spacer on the principal surface of the substrate facing the negative electrode.

In a lithium secondary battery, the major role of the spacer is to form a space in which lithium metal deposits. Lithium metal is accommodated in the space secured by the spacer, and thus, the expansion of the negative electrode during charging is suppressed.

The spacer may contain a resin material (e.g., an insulating resin), and may contain a resin material and particles. The ratio of the resin material in the spacer may be 10 vol% or more, 30 vol% or more, or 50 vol% or more, and may be 100 vol% or less, or 80 vol% or less.

Examples of the resin material contained in the spacer include: fluorine-containing resin, such as polyvinylidene fluoride (PVdF) and polytetrafluoroethylene; fluorine-containing rubber, such as vinylidene fluoride-tetrafluoroethylene copolymer and ethylene-tetrafluoroethylene copolymer; rubbers, such as styrene-butadiene copolymer or hydrogenated product thereof, acrylonitrile-butadiene copolymer or hydrogenated product thereof, methacrylic acid ester-acrylic acid ester copolymer, styrene-acrylic acid ester copolymer, acrylonitrile-acrylic acid ester copolymer, ethylene propylene rubber, and polyvinyl acetate; cellulose derivatives, such as ethyl cellulose, methyl cellulose, hydroxyethyl cellulose, and carboxymethyl cellulose; acrylic resin, such as acrylic acid-methacrylic acid copolymer; polyphenylene ether; polysulfone; polyether sulfone; polyphenylene sulfide; polyetherimide; polyimide; polyamide, such as fully aromatic polyamide (aramid); polyamide imide; polyacrylonitrile; polyvinyl alcohol; polyether; polyacrylic acid; polymethacrylic acid; polyester; polyolefin; silicone resin; urethane resin; melamine resin; urea resin; and epoxy resin.

Among the above resin materials, as a material that does not allow lithium ions to pass therethrough, polyimide, polyvinylidene fluoride, and acrylonitrile-acrylic acid ester copolymer, and the like are preferably used, and polyimide may be used. A non-porous spacer of a certain height or higher formed from any of these resin materials serves as a layer that does not allow lithium ions to pass therethrough. From the viewpoint of suppressing the increase of the reaction rate of gas generation in the event of an internal short circuit, it is preferable to dispose such a spacer.

The particles may be inorganic particles, and may be organic particles. In particular, inorganic particles of a metal oxide, a metal hydroxide, a metal nitride, a metal carbide, a metal sulfide, and the like, with insulating properties can be used. Preferred examples of the metal oxide include aluminum oxide (alumina, boehmite), magnesium oxide, titanium oxide (titania), zirconium oxide, and silicon oxide (silica). Examples of the metal hydroxide include aluminum hydroxide. Examples of the metal nitride include silicon nitride, aluminum nitride, boron nitride, and titanium nitride. Examples of the metal carbide include silicon carbide and boron carbide. Examples of the metal sulfide include barium sulfate. Minerals, such as aluminosilicate, layered silicate, barium titanate, and strontium titanate, may also be used. In particular, alumina, silica, titania, and the like are preferably used.

The average particle diameter of the particles, although not particularly limited to, may be 0.1 µm or more or 0.5 µm or more, and may be 10 µm or less, 5 µm or less, or 2 µm or less. The average particle diameter can be measured in the following manner. First, a cross section of the spacer in the thickness direction of the separator is photographed with an electron microscope, to obtain an image of the cross section. Next, the image is subjected to image processing, such as binarization, to identify the particle portion. Next, the diameter (circle equivalent diameter) of a circle having the same area as the cross section area of each particle is obtained, to calculate an arithmetic average of the circle equivalent diameters, which can be determined as the average particle diameter. The arithmetic average can be obtained, for example, from 100 or more particles. The average particle diameter of other particles contained in the electrode plate and the separator can also be obtained in a similar manner.

When the spacer contains a resin material and particles, the content ratio of the particles in the spacer is preferably 50 vol% or less. This makes it easy to ensure sufficient strength of the spacer.

An area S1 of the spacer may be 30% or less of an area S0 of the substrate. According to this range, a space for lithium metal to deposit can be sufficiently ensured. The areas S1 and S0 are respectively the areas of the spacer and the substrate when the latter is viewed from the former side. A ratio S1/S0 of the area S1 to the area S0 may be 0.20 or less (20% or less) or 0.10 or less, and may be 0.03 or more (3% or more) or 0.05 or more. From the viewpoint of suppressing the increase of the reaction rate of gas generation in the event of an internal short circuit, the S1/S0 ratio is preferably 0.05 or more (5% or more).

The spacer preferably includes at least linear protruding portions, and may be constituted of linear protruding portions only. The linear protruding portions are, from one aspect, ridge-shaped protruding portions. Although the linear protruding portions may be arranged intermittently, it is preferable that the linear protruding portions are arranged continuously from the viewpoint of suppressing the increase of the reaction rate of gas generation in the event of an internal short circuit. The spacer may include dot-shaped protruding portions.

The width of the linear protruding portions may be 100 µm or more or 200 µm or more, and may be 2000 µm or less or 1000 µm or less.

The spacer preferably has a predetermined repeating pattern. That is, it is preferable that the protruding portions are arranged in a predetermined pattern. From the viewpoint of suppressing the increase of the reaction rate of gas generation in the event of an internal short circuit, it is particularly preferable that the linear protruding portions are arranged in a mesh pattern. The mesh pattern may be an assembly of polygons. An example of the mesh pattern includes a shape in which polygons are combined so as to share sides. The polygon includes a triangle, a square, a hexagon, and the like. Different kinds of polygons may be combined. The mesh pattern may be a honeycomb pattern. The linear protruding portions may be arranged in a stripe pattern.

A height Hs of the spacer (protruding portions) may be larger than a thickness Tw of the substrate. A ratio Hs/Tw of the height Hs to the thickness Tw may be more than 1, 1.5 or more, 2 or more, or 3 or more. The Hs/Tw may be 10 or less, 8 or less, 5 or less, or 4 or less. By setting the Hs/Tw to 1.5 or more, the expansion of the electrode group can be particularly suppressed.

The height Hs can be measured in the following manner. First, a cross section of the separator (substrate) in its thickness direction is photographed with an electron microscope, to obtain an image of the cross section. Next, on the image, any 20 points in the spacer are selected, to measure a height of the spacer at each of these points. Next, the heights measured at the 20 points are arithmetically averaged, and the obtained average value is determined as the height Hs. The thickness Tw can be measured in a similar manner.

The spacer is formed by, for example, applying an application liquid containing a component of the spacer and a liquid component, onto the substrate at predetermined places, and drying the applied films. Examples of the liquid component include N-methyl-2-pyrrolidone. The application may be performed using a dispenser and the like, or using a known printing method, such as gravure printing, inkjet printing, and screen printing. The drying may be performed by a known method, such as drying by heating and natural drying.

### (Negative electrode)

The negative electrode includes a negative electrode current collector. In a lithium secondary battery, lithium metal deposits on a surface of the negative electrode during charging. Specifically, lithium ions contained in the nonaqueous electrolyte receive electrons on the negative electrode during charging, to be lithium metal, which deposits on the surface of the negative electrode. The lithium metal deposited on the surface of the negative electrode dissolves as lithium ions in the nonaqueous electrolyte during discharging.

The negative electrode may include a lithium ion storage layer (a layer that exhibits capacity through absorption and release of lithium ions into and from the negative electrode active material such as graphite) supported on the negative electrode current collector. In this case, the open circuit potential of the negative electrode at full charge may be 70 mV or less relative to lithium metal (lithium dissolution/deposition potential). When the open circuit potential of the negative electrode at full charge is 70 mV or less relative to lithium metal, lithium metal is present on the surface of the lithium ion storage layer at full charge. That is, the negative electrode exhibits capacity through deposition and dissolution of lithium metal.

Here, "at full charge" means a state in which the battery is charged to, for example, a charged state of 0.98×C or more, where C is the rated capacity of the battery. The opencircuit potential of the negative electrode at full charge can be measured by disassembling a fully charged battery in an argon atmosphere, to take out the negative electrode, and assembling a cell using lithium metal as a counter electrode. The nonaqueous electrolyte of the cell may be of the same composition as that in the disassembled battery.

The lithium ion storage layer is a layer of a negative electrode mixture containing a negative electrode active material. The negative electrode mixture may contain, in addition to the negative electrode active material, a binder, a thickener, a conductive agent, and the like.

Examples of the negative electrode active material include a carbonaceous material, a Si-containing material, and a Sn-containing material. The negative electrode may contain the negative electrode active material singly or in combination of two or more kinds. As the carbonaceous material, for example, graphite, graphitizable carbon (soft carbon), nongraphitizable carbon (hard carbon), and the like can be used.

The conductive material is, for example, a carbon material. Examples of the carbon material include carbon black, acetylene black, Ketjen black, carbon nanotubes, and graphite.

Examples of the binder include a fluorocarbon resin, polyacrylonitrile, a polyimide resin, an acrylic resin, a polyolefin resin, and a rubbery polymer. Examples of the fluorocarbon resin include polytetrafluoroethylene and polyvinylidene fluoride.

The negative electrode current collector may be a conductive sheet. As the conductive sheet, a foil, a film, and like are used.

The material of the negative electrode current collector (conductive sheet) may be a conductive material other than lithium metal and lithium alloy. The conductive material may be a metal material, such as metal and alloy. The conductive material is preferably a material that does not react with lithium. Specifically, a material that forms neither an alloy nor an intermetallic compound with lithium is preferred. Such a conductive material is exemplified by copper (Cu), nickel (Ni), iron (Fe), and an alloy of one or more of these metal elements, or graphite having a basal plane predominately exposed on its surface. Examples of the alloy include copper alloy and stainless steel (SUS). In particular, copper and/or copper alloy that have high electrical conductivity are preferred.

The thickness of the negative electrode current collector is not particularly limited, and is, for example, 5 µm or more and 300 µm or less.

### (Positive electrode)

The positive electrode includes, for example, a positive electrode current collector, and a positive electrode mixture layer supported by the positive electrode current collector. The positive electrode mixture layer contains, for example, a positive electrode active material, a conductive material, and a binder. The positive electrode mixture layer may be formed on only one surface or on both surfaces of the positive electrode current collector. The positive electrode can be obtained by, for example, applying a positive electrode mixture slurry containing a positive electrode active material, a conductive material, and a binder, onto both surfaces of the positive electrode current collector, and drying the applied films, followed by rolling.

The positive electrode active material is a material that absorbs and releases lithium ions. Examples of the positive electrode active material include a lithium-containing transition metal oxide, a transition metal fluoride, a polyanion, a fluorinated polyanion, and a transition metal sulfide. In particular, a lithium-containing transition metal oxide is preferred because of its inexpensive manufacturing cost and high average discharge voltage.

The lithium contained in the lithium-containing transition metal oxide is released in the form of lithium ions from the positive electrode during charging, and deposits in the form of lithium metal on the negative electrode or the negative electrode current collector. During discharging, the lithium metal dissolves from the negative electrode to release lithium ions, which are absorbed into the composite oxide of the positive electrode. That is, lithium ions involved in charging and discharging are mostly derived from the solute in the nonaqueous electrolyte and the positive electrode active material.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain these transition metal elements singly or in combination of two or more kinds. The transition metal element may be Ni, Co, and/or Mn. The lithium-containing transition metal oxide can contain one or more kinds of typical elements, as necessary. Examples of the typical element include Mg, Al, Ca, Zn, Ga, Ge, Sn, Sb, Pb, and Bi. The typical element may be Al, and the like.

Among the lithium-containing transition metal oxides, a composite oxide containing Ni, Co, and/or Mn as transition metal elements and optionally containing Al, and having a layered rock-salt type crystal structure is preferred in terms of achieving high capacity. In this case, in the lithium secondary battery, a molar ratio mLi/mM of a total amount mLi of the lithium that the positive electrode and the negative electrode have, to an amount mM of the metal M other than lithium that the positive electrode has, is set to, for example, 1.1 or less.

As the binder, the conductive agent, and the like, for example, those exemplified for the negative electrode can be used. The shape and the thickness of the positive electrode current collector can be selected from the shape and the range of the positive electrode current collector.

Examples of the material of the positive electrode current collector (conductive sheet) include a metal material containing Al, Ti, Fe, or the like. The metal material may be Al, Al alloy, Ti, Ti alloy, Fe alloy, and the like. The Fe alloy may be stainless steel (SUS).

The thickness of the positive electrode current collector is, although not particularly limited to, for example, 5 µm or more and 300 µm or less.

### (Nonaqueous electrolyte)

The nonaqueous electrolyte having lithium ion conductivity may be a liquid electrolyte (electrolyte solution), may be a gel electrolyte, and may be a solid electrolyte. The liquid electrolyte is, for example, an electrolyte solution containing a nonaqueous solvent and a lithium salt dissolved in the nonaqueous solvent. The concentration of the lithium salt in the electrolyte solution is, for example, 0.5 mol/L or more and 2 mol/L or less. The electrolyte solution may contain a known additive.

The gel electrolyte contains a lithium salt and a matrix polymer, or contains a lithium salt, a nonaqueous solvent, and a matrix polymer. As the matrix polymer, for example, a polymer material that absorbs a nonaqueous solvent and turns into a gel is used. Examples of the polymer material include a fluorocarbon resin, an acrylic resin, a polyether resin, and polyethylene oxide.

As the solid electrolyte, for example, a known material for use in all-solid lithium-ion secondary batteries and the like (e.g., oxide-based solid electrolyte, sulfide-based solid electrolyte, halide-based solid electrolyte) is used.

The liquid nonaqueous electrolyte is prepared by dissolving a lithium salt in a nonaqueous solvent. When the lithium salt dissolves in the nonaqueous solvent, lithium ions and anions are produced.

As the anions, BF₄⁻, ClO₄⁻, PF₆⁻, CF₃SO₃⁻, CF₃CO₂⁻, imide anions, an oxalate complex anion, and the like can be used. Examples of the imide anions include N(SO₂CF₃)₂⁻, and N(CₘF₂ₘ₊₁SO₂)ₓ(CₙF₂ₙ₊₁SO₂)_{y}⁻, where m and n are each independently an integer of 0 or 1 or more, x and y are each independently 0, 1, or 2, and satisfy x+y = 2. The oxalate complex anion may contain boron and/or phosphorus. Examples of the oxalate complex anion include bis(oxalate)borate anion, difluoro(oxalate)borate anion (BF₂(C₂O₄)⁻), PF₄(C₂O₄)⁻, and PF₂(C₂O₄)₂⁻. The nonaqueous electrolyte may contain these anions singly or in combination of two or more kinds.

From the viewpoint of suppressing dendritic deposition of lithium metal, the nonaqueous electrolyte preferably contains at least an oxalate complex anion, and in particular, it is desirable to contain an oxalate complex anion having fluorine. The oxalate complex anion having fluorine interacts with lithium, which allows lithium metal to easily deposit uniformly in the form of fine particles. Therefore, local deposition of lithium metal can be easily suppressed. The oxalate complex anion having fluorine may be combined with another anion. The other anion may be PF₆⁻ and/or imide anions.

The nonaqueous solvent may be, for example, an ester, an ether, a nitrile, an amide, or halogen-substituted derivatives thereof. The nonaqueous electrolyte may include these nonaqueous solvents singly or in combination of two or more kinds. Examples of the halogen-substituted derivatives include a fluoride.

As the ester, for example, a carbonic acid ester, a carboxylic acid ester, and the like are exemplified. Examples of a cyclic carbonic acid ester include ethylene carbonate, propylene carbonate, and fluoroethylene carbonate (FEC). Examples of a chain carbonic acid ester include dimethyl carbonate (DMC), ethyl methyl carbonate (EMC), and diethyl carbonate. Examples of a cyclic carboxylic acid ester include γ-butyrolactone, and γ-valerolactone. Examples of a chain carboxylic acid ester include ethyl acetate, methyl propionate, and methyl fluoropropionate.

As the ether, a cyclic ether and a chain ether are exemplified. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the nonaqueous electrolyte is, for example, 0.5 mol/L or more and 3.5 mol/L or less. The concentration of the anions in the nonaqueous electrolyte may be set to 0.5 mol/L or more and 3.5 mol/L or less. The concentration of the oxalate complex anion in the nonaqueous electrolyte may be set to 0.05 mol/L or more and 1 mol/L or less.

The nonaqueous electrolyte may contain an additive. The additive may form a surface film on the negative electrode. When a surface film derived from the additive is formed on the negative electrode, the dendrite formation and growth can be easily suppressed. Examples of such an additive include vinylene carbonate, FEC, and vinyl ethyl carbonate (VEC).

From the viewpoint of thermal stability, a cyclic carbonic acid ester having fluorine atoms is preferred, and FEC is more preferred. When the nonaqueous solvent is an ether-based solvent containing an ether, the amount of gas generated in the event of an internal short circuit increases as compared to when the nonaqueous solvent contains a cyclic carbonate having fluorine atoms (e.g., FEC). Therefore, in the former case, the effect of reducing the increase rate of the battery internal pressure according to the present disclosure can be significantly achieved.

A description will be given below of one example of a lithium secondary battery according to the present embodiment, with reference to the drawings. To the components of the below-described example of the secondary battery, the components as described above can be applied. The components of the below-described example of the secondary battery can be modified based on the description above. The matters as described below may be applied to the above embodiments. In the below-described lithium secondary battery, the components which are not essential to the lithium secondary battery according to the present disclosure may be omitted. In the drawings referred to below, the scale of the components is changed to facilitate understanding.

### (Embodiment 1)

FIG. 1 is a schematic longitudinal sectional view of an example of a lithium secondary battery according to one embodiment. In FIG. 1, the spacer and the space formed by the spacer are not shown. A cylindrical lithium secondary battery 10 illustrated in FIG. 1 includes a cylindrical battery case, and a wound electrode group 14 and a nonaqueous electrolyte (not shown) housed in the battery case. The battery case includes a case main body 15, which is a metal container having a bottomed cylindrical shape, and a sealing body 16 sealing the opening of the case main body 15. A gasket 27 is disposed between the case main body 15 and the sealing body 16. The gasket 27 ensures the hermeticity of the battery case. In the case main body 15, insulating plates 17 and 18 are respectively disposed at both ends of the electrode group 14 in the winding axis direction.

The case main body 15 has a step portion 21 formed by, for example, partially pressing the sidewall of the case main body 15 from the outside. The step portion 21 may be formed, on the sidewall of the case main body 15, in an annular shape along the circumferential direction of the case main body 15. In this case, the sealing body 16 is supported on the opening-side surface of the step portion 21.

The sealing body 16 includes a filter 22, a lower valve body 23, an electrically insulating member 24, an upper valve body 25, and a cap 26. In the sealing body 16, these members are stacked in this order. The sealing body 16 is attached at the opening of the case main body 15 so that the cap 26 is positioned outside the case main body 15, and the filter 22 is positioned inside the case main body 15. Each of the above members constituting the sealing body 16 is, for example, disc-shaped or ring-shaped. The lower valve body 23 and the upper valve body 25 are connected to each other at their respective central portions, and an insulating member 24 is interposed between the respective peripheral portions. The filter 22 and the lower valve body 23 are connected to each other at their respective central portions. The upper valve body 25 and the cap 26 are connected to each other at their respective central portions. In other words, the members except the insulating member 24 are electrically connected to each other.

The sealing body 16 of Embodiment 1 includes a current cutoff mechanism and a pressure release mechanism. The lower valve body 23 has a vent hole (not shown). Therefore, when the internal pressure of the battery case increases due to a short circuit (abnormal heat generation) or other events, the upper valve body 25 bulges toward the cap 26 and spaced away from the lower valve body 23. This cuts off the electrical connection between the lower valve body 23 and the upper valve body 25. When the internal pressure further increases to reach a predetermined value P, the upper valve body 25 ruptures, to let the gas escape though an aperture (not shown) formed in the cap 26. In the sealing body 16, the operating pressure P of the pressure release mechanism is higher than the operating pressure PA of the current cutoff mechanism.

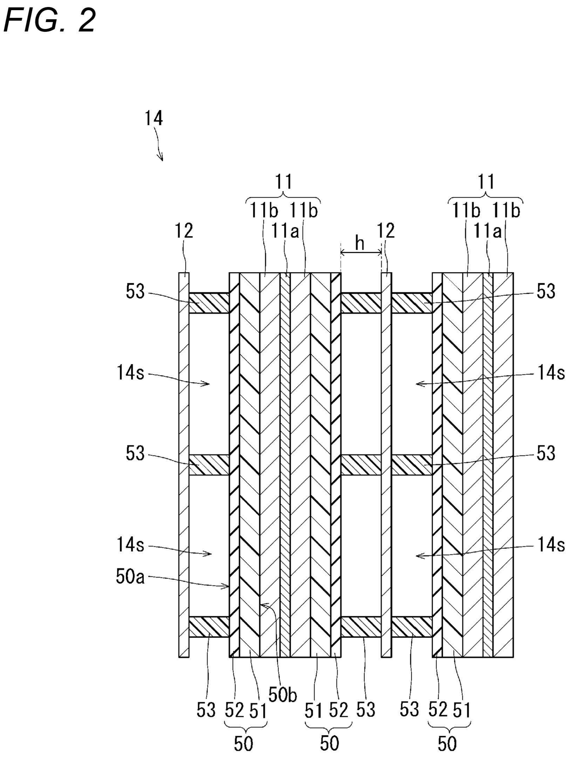

FIG. 2 is a partial enlarged view of the electrode group 14. FIG. 2 includes a portion in the vicinity of the positive electrode surrounded by a region II in FIG. 1 and a portion in the vicinity of the negative electrode surrounded by a region III in FIG. 1.

The electrode group 14 includes a positive electrode 11, a negative electrode 12, and a separator (a substrate 50 and a spacer 53). The positive electrode 11, the negative electrode 12, and the substrate 50 of the separator are all belt shaped. The electrode group 14 is formed by winding the positive electrode 11, the negative electrode 12, and the separator (substrate 50), with the separator disposed between the positive electrode 11 and the negative electrode 12.

The positive electrode 11 includes a positive electrode current collector 11a, and a positive electrode mixture layer 11b. The positive electrode current collector 11a is electrically connected, via a positive electrode lead 19, to the cap 26 that functions as a positive electrode terminal. In FIG. 2, as the negative electrode 12, a negative electrode (negative electrode current collector) without lithium metal deposited thereon is shown. The negative electrode 12 is electrically connected, via a negative electrode lead 20, to the case main body 15 that functions as a negative electrode terminal.

The substrate 50 has a first principal surface 50a facing the negative electrode 12 and a second principal surface 50b facing the positive electrode 11. The substrate 50 of Embodiment 1 includes a porous sheet 51 and a composite material layer 52 (heat-resistant layer). The composite material layer 52 is formed, of two principal surfaces of the porous sheet 51, on the principal surface facing the negative electrode 12. In Embodiment 1, the spacer 53 is formed on the first principal surface 50a. The spacer 53 is formed on the composite material layer 52 and is in contact with the negative electrode 12. By the spacer 53, a space 14s is formed between the positive electrode 11 and the negative electrode 12 (between the negative electrode 12 and the substrate 50). In FIG. 2, the height h of the spacer 53 is shown.

In FIG. 2, the composite material layer 52 of the substrate 50 is disposed on the negative electrode 12 side, which however may be disposed on the positive electrode 11 side. The spacer 53 is formed on the composite material layer 52, which however may be formed on the porous sheet 51. The spacer 53 is disposed on the negative electrode 12 side of the substrate 50, which however may be disposed on the positive electrode 11 side of the substrate 50.

In the lithium secondary battery 10, lithium metal deposits on the negative electrode 12 during charging. By the presence of the space 14s between the positive electrode 11 and the negative electrode 12, the volume change of the electrode group 14 in association with the deposition of lithium metal can be reduced, leading to improved cycle characteristics.

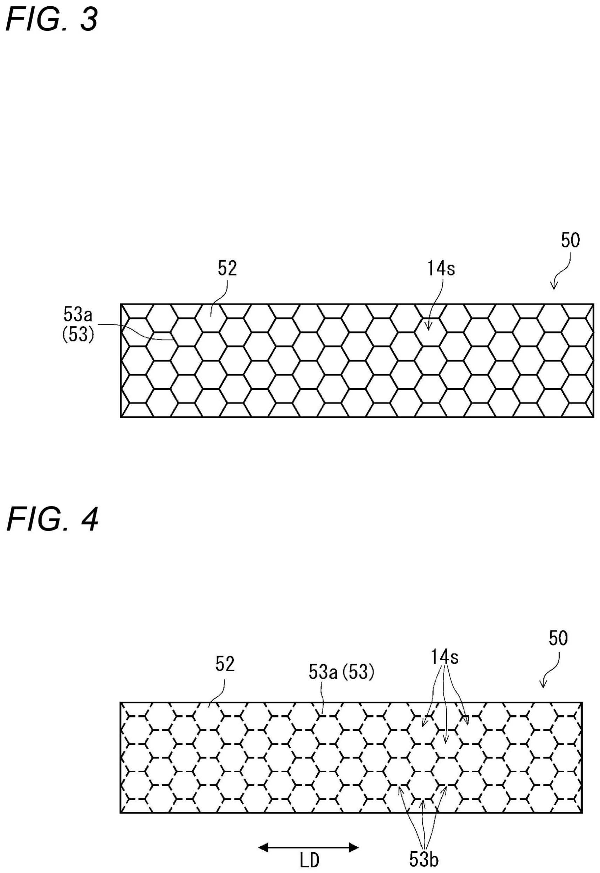

An example of the planar shape of the spacer 53 is shown in FIG. 3. An example the spacer 53 illustrated in FIG. 3 is constituted of linear protruding portions 53a arranged in a honeycomb pattern. The linear protruding portions 53a are arranged continuously. The regions where no spacer 53 is formed constitute the space 14s.

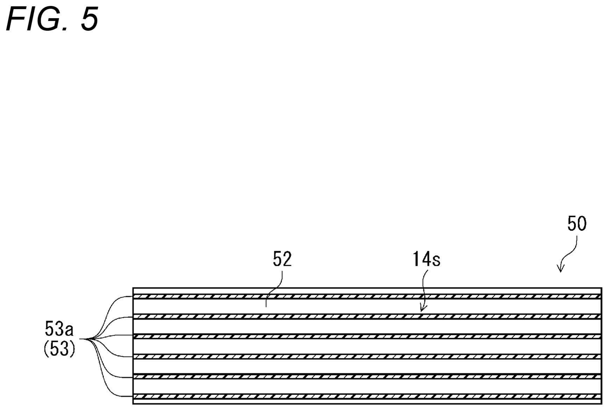

Other examples of the planar shape of the spacer 53 are shown in FIGS. 4 and 5. In the spacer 53 of FIG. 4, the linear protruding portions 53a arranged in a honeycomb pattern have missing portions 53b, and the linear protruding portions 53a are arranged intermittently. In the spacer 53 of FIG. 5, a plurality of the linear protruding portions 53a are arranged in a stripe pattern. In FIG. 5, six linear protruding portions 53a are arranged. The number of the linear protruding portions 53a, however, is not limited thereto. The linear protruding portions 53a in FIG. 5 are arranged along the length direction of the belt-shaped substrate 50.

In Embodiment 1, a cylindrical lithium secondary battery including a wound electrode group is described. However, the lithium secondary battery of the present embodiment is not limited to the form of Embodiment 1, and is applicable also to other forms. The shape of the lithium secondary battery can be selected as appropriate from various shapes, such as cylindrical, coin, prismatic, sheet-like, and flat shapes, depending on its use etc. The form of the electrode group is also not particularly limited, and may be a stacked type.

### (Supplementary notes)

The above description of embodiments discloses the following techniques.

### (Technique 1)

A lithium secondary battery, comprising:
a power generating element, and a battery case in which the power generating element is sealed, wherein
the power generating element includes a positive electrode, a negative electrode, a separator disposed between the positive electrode and the negative electrode, and a nonaqueous electrolyte,
at the negative electrode, lithium metal deposits during charging, and the lithium metal dissolves during discharging,
the separator includes a substrate and a spacer,
the lithium secondary battery includes a pressure release mechanism that discharges a gas within the battery case outside the battery case when a pressure inside the battery case reaches a predetermined value P, and
the predetermined value P is less than 3 MPa.

### (Technique 2)

The lithium secondary battery according to technique 1, wherein the predetermined value P is 2.5 MPa or less.

### (Technique 3)

The lithium secondary battery according to technique 1 or 2, wherein
the battery case includes a case main body having a bottomed tubular shape, and a sealing body sealing an opening of the case main body, and
the sealing body or a bottom portion of the case main body is provided with the pressure release mechanism.

### (Technique 4)

The lithium secondary battery according to technique 3, wherein
the sealing body includes a metal plate,
the metal plate has a thin-walled portion that ruptures when the pressure inside the battery case reaches the predetermined value P, and
the pressure release mechanism operates when the thin-walled portion ruptures.

### (Technique 5)

The lithium secondary battery according to technique 4, wherein a ratio T/D of a thickness T of the thin-walled portion to a maximum diameter D of the sealing body is less than 0.009.

### (Technique 6)

The lithium secondary battery according to any one of techniques 1 to 5, wherein the spacer has a predetermined repeating pattern.

### (Technique 7)

The lithium secondary battery according to any one of techniques 1 to 6, wherein the spacer includes a resin material.

### (Technique 8)

The lithium secondary battery according to any one of techniques 1 to 7, wherein the spacer is disposed on one principal surface of the substrate.

### (Technique 9)

The lithium secondary battery according to any one of techniques 1 to 8, wherein the substrate includes a porous sheet containing a polymer material, and a composite material layer containing a resin material and inorganic particles.

### (Technique 10)

The lithium secondary battery according to any one of techniques 1 to 9, wherein the nonaqueous electrolyte contains an ether-based solvent.

### (Technique 11)

The lithium secondary battery according to any one of techniques 1 to 10, wherein the nonaqueous electrolyte contains an oxalate complex anion.

### (Technique 12)

The lithium secondary battery according to technique 11, wherein the oxalate complex anion includes difluoro(oxalate)borate anion.

### [Examples]

The lithium secondary battery according to the present disclosure will be more specifically described below with reference to Examples and Comparative Examples. The present disclosure, however, is not limited to the following Examples.

### <<Example 1>>

### (Production of positive electrode)

A positive electrode active material, acetylene black (AB; conductive material), polyvinylidene fluoride (PVdF; binder), and an appropriate amount of N-methyl-2-pyrrolidone (NMP) were mixed, to prepare a positive electrode mixture slurry. For the positive electrode active material, a layered rock-salt type lithium-containing transition metal oxide (NCA: positive electrode active material) containing Li, Ni, Co, and Al (the molar ratio of Li to the total of Ni, Co, and Al being 1.0) was used. In the positive electrode mixture slurry, NCA:AB:PVdF = 95:2.5:2.5 by mass. The positive electrode mixture slurry was applied onto both surfaces of a belt-shaped Al foil (positive electrode current collector), and the applied films were dried and rolled, to form positive electrode mixture layers. The positive electrode current collector with the positive electrode mixture layers formed on both surfaces was cut in a predetermined size, to obtain a positive electrode.

### (Preparation of negative electrode current collector)

A belt-shaped electrolytic copper foil (thickness 12 µm) was prepared as a negative electrode current collector.

### (Production of substrate)

A 10-µm-thick microporous thin film made of polyethylene was prepared. An application liquid containing paraphenylene terephthalamide, which was as an aromatic polyamide, as a resin material, and alumina as inorganic particles was applied onto one principal surface of the microporous thin film. For the application liquid, an N-methyl-2-pyrrolidone solution in which 5.8 mass% of calcium chloride was dissolved was used, to adjust such that the concentration of the aromatic polyamide was 2 wt% and the concentration of the alumina was 4 wt%. The substrate with the applied films formed thereon was left for 1 hour in an atmosphere at a temperature of 25 °C and a relative humidity of 70%, to allow the aromatic polyamide to deposit. Next, the NMP and the calcium chloride in the applied film were removed by washing with water. The applied film was dried at 60 °C for 5 minutes, to form a composite material layer (heat-resistant layer). In this way, a substrate having a microporous thin film and a composite material layer was obtained.

### (Formation of spacer on principal surface of substrate)

An application liquid containing polyvinylidene fluoride and alumina particles (inorganic filler) was applied onto the surface of the microporous thin film of the substrate, and the applied film was dried, to form a spacer having a pattern as shown in FIG. 3 (honeycomb pattern). In this way, a separator having the substrate and the spacer was obtained. The linear protruding portions constituting the spacer had a width of 0.25 mm and a height of 30 µm. The area S1 of the spacer was 21% of the area S0 of the substrate.

### (Preparation of nonaqueous electrolyte)

An ether-based mixed solvent containing 1,2-dimethoxyethane (DME) and 1,1,2,2-tetrafluoroethyl 2,2,2-trifluoroethyl ether (CHF₂(CF₂OCH₂)CF₃) in a volume ratio of 1:2 was prepared. In the mixed solvent, lithium bis(fluorosulfonyl)imide (LiFSI) was dissolved at a concentration of 1 mol/L, and LiBF₂(C₂O₄) was dissolved at a concentration of 0.1 mol/L, to prepare a liquid nonaqueous electrolyte (ether-based electrolyte solution).

### (Assembly of battery)

In an inert gas atmosphere, the positive electrode and the negative electrode current collector were spirally wound with a separator interposed therebetween, to prepare an electrode group. At this time, the separator was disposed such that the spacer faced the negative electrode. In this way, a wound electrode group having a structure as illustrated in FIG. 2 was obtained. The electrode group was housed in a case main body having a bottomed cylindrical shape, into which the nonaqueous electrolyte was injected.

A sealing body (sealing body 16 in FIG. 1) provided with a pressure release mechanism was prepared. The operating pressure P of the pressure release mechanism was set to 1.6 MPa by adjusting the thickness of the thin-walled portion of the metal plate of the sealing body (upper valve body 25 in FIG. 1). The T/D was 0.004, which was calculated from the diameter of the upper valve body 25 corresponding to the maximum diameter D of the sealing body, and the thickness of the upper valve body 25 corresponding to the thickness T of the thin-walled portion.

A sealing body was disposed at the opening of the case main body with a gasket interposed therebetween, to seal the electrode group and nonaqueous electrolyte inside the battery case. In this way, a lithium secondary battery A1 having a structure as illustrated in FIG. 1 was completed.

### <<Example 2>>

A lithium secondary battery A2 was produced in the same manner as in Example 1, except that in the fabrication of an electrode group, the separator was disposed such that the spacer faced the positive electrode.

### <<Example 3>>

A lithium secondary battery A3 was produced in the same manner as in Example 1, except that a spacer having a pattern as shown in FIG. 4 was formed using a dispenser. The linear protruding portions were arranged intermittently. The area S1 of the spacer was 17% of the area S0 of the substrate.

### <<Example 4>>

A mixed solvent containing fluoroethylene carbonate (FEC), ethyl methyl carbonate (EMC), and dimethyl carbonate (DMC) in a volume ratio of 20:5:75 was prepared. In the mixed solvent, LiPF₆ was dissolved at a concentration of 1 mol/L, and LiBF₂(C₂O₄) was dissolved at a concentration of 0.5 mol/L, to prepare a liquid nonaqueous electrolyte (FEC-based electrolyte solution).

Except for the above, in the same manner as in Example 1, a lithium secondary battery A4 was produced.

### <<Examples 5 and 6>>

Lithium secondary batteries A5 and A6 were produced in the same manner as in Example 1, except that the operating pressure P of the pressure release mechanism was set to 1.9 MPa or 2.5 MPa, by adjusting the thickness of the thin-walled portion of the metal plate of the sealing body (the upper valve body 25 in FIG. 1). The T/D was 0.005 (A5) or 0.007 (A6).

### <<Example 7>>

A lithium secondary battery A7 was produced in the same manner as in Example 1, except that a spacer having a pattern as shown in FIG. 5 was formed using a dispenser. The number of the linear protrusions arranged in a stripe shape was 26, and the width of the linear protrusions was 0.25 mm. The area S1 of the spacer was 20% of the area S0 of the substrate.

### <<Comparative Example 1>>

A lithium secondary battery B1 was fabricated in the same manner as in Example 1, except that, without forming the spacer on one principal surface of the substrate, a spacer having a pattern as shown in FIG. 5 was formed on each of both principal surfaces of the electrolytic copper foil (negative electrode current collector). The number of linear protrusions arranged in a stripe shape was 26, and the width of the linear protrusions was 0.25 mm. The area S1 of the spacer was 20% of the area S0 of the substrate.

### <<Comparative Example 2>>

A lithium secondary battery B2 was fabricated in the same manner as in Comparative Example 1, except that the same FEC-based electrolyte solution as used in Example 4 was used as the nonaqueous electrolyte.

### <<Comparative Example 3>>

A lithium secondary battery B3 was fabricated in the same manner as in Example 1, except that the operating pressure P of the pressure release mechanism was set to 3.0 MPa by adjusting the thickness of the thin-walled portion of the metal plate of the sealing body (the upper valve body 25 in FIG. 1). The T/D ratio was 0.009.

### [Evaluation: Internal short-circuit test]

Each of the obtained batteries was subjected to a constant-current charging at a current of 0.5 mA per unit area (square centimeters) of the electrode until the battery voltage reached 4.2 V, and then, to a constant-voltage charging at 4.2 V until the current value per unit area of the electrode reached 0.05 mA. In this way, a fully charged battery was obtained.

The fully charged battery was placed in a sealed container, and an internal short circuit was caused in the battery by nail penetration, to generate heat. The nail used here was a N45 nail (shank diameter 2.45 mm), and the nail penetration speed was set to 0.1 mm/sec. The battery generated heat due to the internal short circuit, to produce gas within the battery, which activated the pressure release mechanism, to release the gas outside the battery. The change over time of the pressure in the sealed container during this was measured with a pressure sensor, to determine an amount of change in the pressure per unit time, as an internal pressure differential value (MPals), and obtain a maximum value of the internal pressure differential value. Since the rate of releasing gas outside the battery depends on the rate of gas generation inside the battery (increase rate of the battery internal pressure), the maximum value of the internal pressure differential value was determined as an index of the increase rate of the battery internal pressure.

The evaluation results are shown in Table 1. In Table 1, "good" indicates that the internal pressure differential was 1 MPals or less, and the increase rate of the internal pressure was significantly reduced. "Fair" indicates that the internal pressure differential was more than 1 MPa/s and less than 4 MPa/s, and the increase rate of the internal pressure was suppressed relatively low. "Poor" indicates that the internal pressure differential was 4 MPa/s or more, and the increase rate of the internal pressure was significantly increased.

**[Table 1]**

| battery | spacer | | ratio of area S1 of spacer to area S0 of substrate (%) | ratio T/D of thickness T of thin-walled portion to maximum diameter D of sealing body | operating pressure of pressure release mechanism (MPa) | nonaqueous electrolyte | internal short-circuit test | |
|---|---|---|---|---|---|---|---|---|
| | place of formation | pattern of formation | | | | | Internal pressure differential value (MPa/s) | evaluation |
| A1 | one surface of substrate (on negative electrode side) | honeycomb | 21 | 0.004 | 1.6 | ether-based | 0.3 | good |
| A2 | one surface of substrate (on positive electrode side) | honeycomb | 21 | 0.004 | 1.6 | ether-based | 1.0 | good |
| A3 | one surface of substrate (on negative electrode side) | honeycomb (intermittent) | 17 | 0.004 | 1.6 | ether-based | 0.6 | good |
| A4 | one surface of substrate (on negative electrode side) | honeycomb | 21 | 0.004 | 1.6 | FEC-based | 0.2 | good |
| A5 | one surface of substrate (on negative electrode side) | honeycomb | 21 | 0.005 | 1.9 | ether-based | 0.3 | good |
| A6 | one surface of substrate (on negative electrode side) | honeycomb | 21 | 0.007 | 2.5 | ether-based | 0.3 | good |
| A7 | one surface of substrate (on negative electrode side) | stripe | 20 | 0.004 | 1.6 | ether-based | 3.1 | fair |
| B1 | both surface of negative electrode current collector | stripe | 20 | 0.004 | 1.6 | ether-based | 6.7 | poor |
| B2 | both surface of negative electrode current collector | stripe | 20 | 0.004 | 1.6 | FEC-based | 4.2 | poor |
| B3 | one surface of substrate (on negative electrode side) | honeycomb | 21 | 0.009 | 3.0 | ether-based | 5.5 | poor |

In the batteries A1 to A7, in which the spacer was formed on one surface of the substrate of the separator, and the operating pressure of the pressure release mechanism was less than 3.0 MPa, the increase rate of the internal pressure was reduced.

In the batteries B1 and B2, in which the operating pressure of the pressure release mechanism was set to less than 3.0 MPa, but the spacer was formed on both surfaces of the negative electrode current collector, the increase rate of the internal pressure in the event of an internal short circuit was significantly increased. In the battery B3, in which the spacer was formed on one surface of the substrate of the separator, but the operating pressure of the pressure release mechanism was set to 3.0 MPa, the increase rate of the internal pressure was significantly increased.

### [Industrial Applicability]

The lithium secondary battery of the present disclosure can be used in electronic devices, such as mobile phones, smartphones, and tablet terminals, electric cars including hybrids and plug-in hybrids, and home storage battery systems combined with a solar cell.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 10 :: lithium secondary battery
- 11 :: positive electrode
- 12 :: negative electrode
- 14 :: electrode group
- 14s :: space
- 15 :: case main body
- 16 :: sealing body
- 23 :: lower valve body
- 25 :: upper valve body
- 50 :: substrate
- 51 :: porous sheet
- 52 :: composite material layer
- 53 :: spacer
- 53a :: protruding portion

## Claims

1. A lithium secondary battery, comprising:
a power generating element, and a battery case in which the power generating element is sealed, wherein
the power generating element includes a positive electrode, a negative electrode, a separator disposed between the positive electrode and the negative electrode, and a nonaqueous electrolyte,
at the negative electrode, lithium metal deposits during charging, and the lithium metal dissolves during discharging,
the separator includes a substrate and a spacer,
the lithium secondary battery includes a pressure release mechanism that discharges a gas within the battery case outside the battery case when a pressure inside the battery case reaches a predetermined value P, and
the predetermined value P is less than 3 MPa.

2. The lithium secondary battery according to claim 1, wherein the predetermined value P is 2.5 MPa or less.

3. The lithium secondary battery according to claim 1, wherein
the battery case includes a case main body having a bottomed tubular shape, and a sealing body sealing an opening of the case main body, and
the sealing body or a bottom portion of the case main body is provided with the pressure release mechanism.

4. The lithium secondary battery according to claim 3, wherein
the sealing body includes a metal plate,
the metal plate has a thin-walled portion that ruptures when the pressure inside the battery case reaches the predetermined value P, and
the pressure release mechanism operates when the thin-walled portion ruptures.

5. The lithium secondary battery according to claim 4, wherein a ratio T/D of a thickness T of the thin-walled portion to a maximum diameter D of the sealing body is less than 0.009.

6. The lithium secondary battery according to claim 1, wherein the spacer has a predetermined repeating pattern.

7. The lithium secondary battery according to claim 1, wherein the spacer includes a resin material.

8. The lithium secondary battery according to claim 1, wherein the spacer is disposed on one principal surface of the substrate.

9. The lithium secondary battery according to claim 1, wherein the substrate includes a porous sheet containing a polymer material, and a composite material layer containing a resin material and inorganic particles.

10. The lithium secondary battery according to claim 1, wherein the nonaqueous electrolyte contains an ether-based solvent.

11. The lithium secondary battery according to claim 1, wherein the nonaqueous electrolyte contains an oxalate complex anion.

12. The lithium secondary battery according to claim 11, wherein the oxalate complex anion includes difluoro(oxalate)borate anion.
